# EUROPEAN PATENT APPLICATION

(11) **EP 4 749 657 A1**
(43) Date of publication of application: **27.05.2026**
(21) Application number: 25165741.7
(22) Date of filing: 24.03.2025
(51) Int. Cl.: G21C 7/117, G21C 9/027

(54) **CONTROL ROD ASSEMBLY WITH ENHANCED CONTROL ROD WORTH**

(30) Priority: 21.11.2024 KR 20240167054
(71) Applicant: KEPCO NUCLEAR FUEL CO., LTD., Daejeon 34057 (KR)
(72) Inventor: CHOI, Dae Woon, 34074 Daejeon (KR); HA, Dong Geun, 34023 Daejeon (KR); LEE, Shin Ho, 34119 Daejeon (KR); KIM, Seong Soo, 34130 Daejeon (KR); RYU, Joo Young, 34022 Daejeon (KR); KIM, Kyounghong, 34040 Daejeon (KR); LEE, Hak In, 30150 Sejong (KR); CHUN, Joo Hong, 49520 Busan (KR); KIM, Ba Leum, 30141 Sejong-si (KR); YOON, Ju Yeob, 34130 Daejeon (KR); SONG, Han Seung, 34070 Daejeon (KR); CHO, Beom Hee, 30098 Sejong-si (KR); YU, Ho Sung, 34022 Daejeon (KR); BAE, Gong Hoon, 34022 Daejeon (KR)
(74) Representative: De Vries & Metman

(57) **Abstract**

Proposed is a control rod assembly with enhanced control rod worth suitable for a small modular reactor (SMR). The control rod assembly with enhanced control rod worth includes a plurality of spider vanes provided radially on a plane perpendicular to a spider body to support control rods, wherein the control rods consist of 28 shutdown group neutron absorbers in total made of B₄C comprising B-10 enriched to at least 70%.

## Description

### CROSS REFERENCE TO RELATED APPLICATION

The present application claims priority to Korean Patent Application No. 10-2024-0167054, filed November 21, 2024, the entire contents of which are incorporated herein for all purposes by this reference.

### BACKGROUND

### Technical Field

The present disclosure relates to a control rod assembly with enhanced control rod worth suitable for a small modular reactor (SMR).

### Description of the Related Art

The control rod assembly of a nuclear reactor is an important component that controls the nuclear fission reaction in the core and regulates the power output. The control rod assembly is generally composed of a spider body and a number of spider vanes extending radially from the spider body, and each spider vane is equipped with a control rod made of neutron-absorbing material.

A conventional 17x17-type reactor control rod assembly featured a structure with 24 control rods in total arranged in a plurality of spider vanes, which were arranged radially around a spider body. This structure provided sufficient control capability under normal operating conditions, but new requirements are emerging due to recent developments in nuclear power generation technology.

In particular, when applying boron-free operation and top-mounted in-core instrumentation (TM-ICI), there was an issue where the control rod worth for core shutdown needed to be increased, but the number of control rods that might be installed was limited. Since boron-free operation controls core reactivity only with control rods instead of diluting boron, a toxic substance, in the coolant, increasing the control rod worth is essential.

In addition, the conventional control rod assembly structure had a relatively small number of guide tubes in the nuclear fuel assembly, leaving room for improvement in terms of seismic performance.

Therefore, there is a need to develop a new control rod assembly that may effectively increase the control rod worth while allowing the application of boric acid-free core conditions and TM-ICI and improving seismic performance at the same time.

The foregoing is intended merely to aid in the understanding of the background of the present disclosure, and is not intended to mean that the present disclosure falls within the purview of the related art that is already known to those skilled in the art.

### Documents of Related Art

### [Patent Document]

Patent Document 1: Korean Patent Publication No. 10-1994-0003796 B1 (Published on May 03, 1994)
Patent Document 2: Korean Patent Publication No. 10-1992-0007739 B1 (Published on September 16, 1992)

### SUMMARY

Accordingly, the present disclosure has been made keeping in mind the above problems occurring in the related art, and the present disclosure is intended to provide a control rod assembly with an enhanced control rod worth suitable for a small modular reactor (SMR).

In order to achieve the objectives of the present disclosure as described above, a control rod assembly according to the present disclosure may include: a plurality of spider vanes provided radially on a plane perpendicular to a spider body to support control rods, wherein the control rods consist of 28 shutdown group neutron absorbers in total made of B₄C comprising B-10 enriched to at least 70%.

The control rod assembly may include 28 control rods in total, wherein the spider vanes may include: four first spider vanes Ixx and Iyy arranged in principal-axis directions; four second spider vanes Ixy arranged in diagonal directions with respect to the first spider vanes; and eight third spider vanes Ixxy and Ixyy arranged in non-diagonal directions between the first spider vanes Ixx and Iyy and the second spider vanes Ixy, wherein each of the first spider vanes and the third spider vanes is provided with two control rods, and each of the second spider vanes is provided with one, thereby resulting in 28 control rods in total.

The control rods may be arranged: two in each of the first spider vanes and the third spider vanes; and one in each of the second spider vanes.

B-10 enrichment of the neutron absorbers may be 95%.

The control rod assembly is used under boric acid-free operating conditions.

As described above, a control rod assembly according to the present disclosure may include: a plurality of spider vanes that are provided radially on a plane perpendicular to a spider body to support control rods, wherein the control rods consist of 28 shutdown group neutron absorbers in total made of B₄C comprising B-10 enriched to at least 70%. As a result, there are effects that the control rod worth and seismic performance may be enhanced.

### 1) Improvement of control rod worth for boric acid-free core operation

A typical commercial pressurized water reactor is operated with the control rods fully withdrawn for most of the time, and the excess reactivity is controlled by soluble boric acid and burnable absorber rods. On the other hand, the recent development of small modular reactors is being carried out with a boric acid-free core as the top priority. Therefore, insertion of the control rods is required from the beginning of the cycle for the small modular reactors. The excess reactivity, which was controlled by water-soluble boric acid and burnable absorber rods in existing commercial reactors, may be controlled only by concentrated Gd burnable absorber rods, in the SMR core, and a remaining excess reactivity (no greater than 1000 pcm) may be controlled to a critical state (keff = 1.0) by inserting regulating control rods. Therefore, the present disclosure may satisfy the subcriticality requirement by improving the control rod worth.

### 2) Enhancement of seismic performance

The present disclosure increases the number of guide tubes fixed to the top nozzle and the bottom nozzle. This increases the bending rigidity of the skeleton of the nuclear fuel assembly, reduces the displacement of the nuclear fuel assembly at the same energy level with increased natural frequency, and also reduces the load generated. Therefore, there is an effect that seismic performance may be enhanced.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a front view showing a control rod assembly according to an embodiment of the present disclosure;
FIG. 2 is a plan view showing an arrangement pattern of control rods of the control rod assembly according to the embodiment of the present disclosure;
FIG. 3 is a plan view showing a spacer grid having a lattice structure in a nuclear fuel assembly to which a control rod assembly according to the embodiment of the present disclosure is applied; and
FIG. 4 is a graph showing changes in a reactor effective multiplication factor keff under each of ARI and N-1 conditions according to changes in B-10 concentration.

### DETAILED DESCRIPTION

Specific structural or functional descriptions presented in the embodiments of the present disclosure are merely exemplified for the purpose of explaining embodiments according to the concept of the present disclosure, and embodiments according to the concept of the present disclosure may be implemented in various forms. In addition, the descriptions presented should not be construed as being limited to the embodiments described in the present specification but should be understood to include all modifications, equivalents, or substitutes included in the spirit and scope of the present disclosure.

Meanwhile, the terms used in this specification are only used to describe specific embodiments and are not intended to limit the present disclosure. Singular expressions include plural expressions unless the context clearly indicates otherwise. It should be understood that the terms "comprise" or "have" as used herein are intended to specify the presence of an implemented feature, number, step, operation, component, part, or combination thereof, but do not exclude in advance the possibility of the presence or addition of one or more other features, numbers, steps, operations, components, parts, or combinations thereof.

Hereinafter, embodiments of the present disclosure will be described in detail with reference to the accompanying drawings.

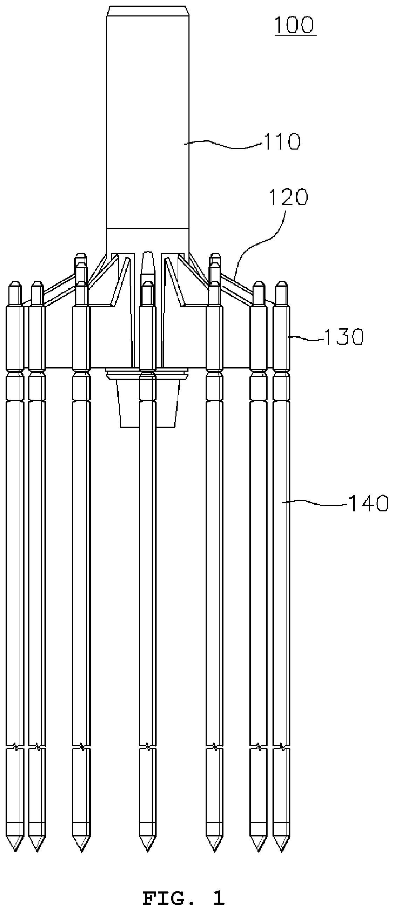

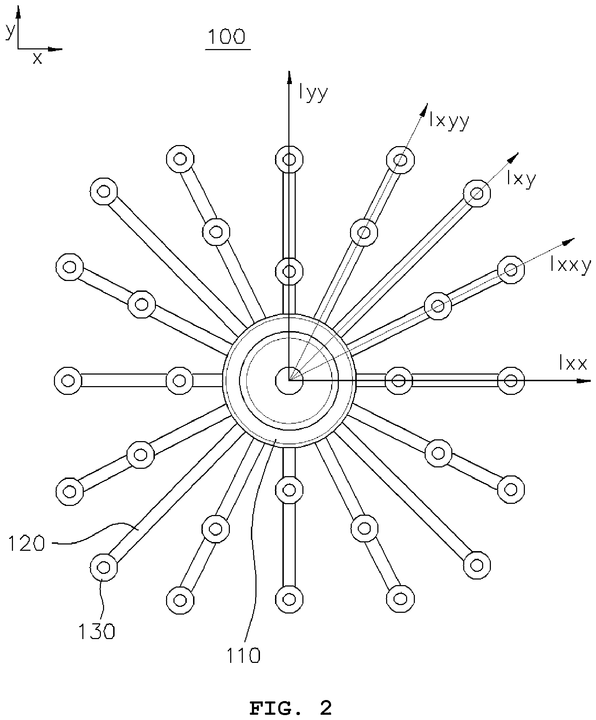

FIG. 1 is a front view showing a control rod assembly according to an embodiment of the present disclosure, and FIG. 2 is a plan view showing an arrangement pattern of control rods of the control rod assembly according to the embodiment of the present disclosure.

With reference to FIGS. 1 and 2, the control rod assembly 100 of the present embodiment includes a plurality of spider vanes 120 provided radially on a plane that is perpendicular to a spider body 110, and each spider vane 120 has a control rod 140 fixed to it. In addition, each spider vane 120 is provided with a finger 130 to which an upper end of the control rod 140 is assembled.

The spider vanes 120 may be composed of four first spider vanes Ixx and Iyy arranged in principal-axis directions, four second spider vanes Ixy arranged in diagonal directions with respect to the first spider vanes, and eight third spider vanes Ixxy and Ixyy arranged in non-diagonal directions between the first spider vanes Ixx and Iyy and the second spider vanes Ixy. Consequentially, the control rod assembly 100 may be provided with 28 control rods 140 in total.

The control rods may be arranged as follows: two in each of the first spider vanes, Ixx and Iyy, and the third spider vanes, Ixxy and Ixyy; and one in each of the second spider vanes, Ixy.

The 28 control rods of this control rod assembly are inserted and arranged in guide tubes provided in the nuclear fuel assembly. Below, in order to help understand the specific arrangement positions of the control rods, the explanation is given from the perspective of the guide tubes of a spacer grid of the nuclear fuel assembly.

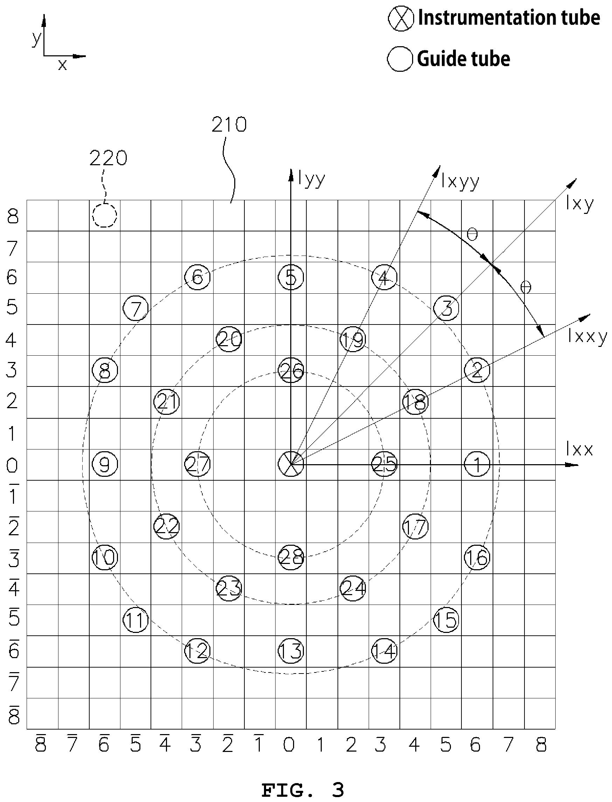

FIG. 3 is a plan view showing a spacer grid having a lattice structure in a nuclear fuel assembly to which a control rod assembly according to the embodiment of the present disclosure is applied.

The spacer grid 210 is assembled to have a lattice shape by assembling a number of straps in horizontal and vertical directions, and each square lattice cell divided by the straps is arranged with one fuel rod or guide tube. The control rod described above is inserted and positioned in the guide tube.

The spacer grid 210 is provided with dimples and grid springs in the lattice cell into which the fuel rod 220 is inserted to elastically support the fuel rod. In addition, the spacer grid 210 may fix the guide tubes with the mediation of sleeves in the lattice cell into which the guide tube is inserted, or the spacer grid 210 and the guide tube may be fixed by direct welding. Such spacer grids 210 are typically manufactured using sheet metal processing and welding but may also be produced using a metal 3D printing device and are not limited to a specific manufacturing method.

The spacer grid 210 may be provided with 17×17 lattice cells, and the guide tubes, where the control rods are positioned, are arranged at specific positions among the lattice cells of the spacer grid 210 and are composed of 28 in total. The following is a detailed description of an example thereof.

In FIG. 3, to help understanding, the horizontal direction of the spacer grid 210 is the x-axis, the vertical direction is the y-axis, and the position of a specific lattice cell is indicated in a two-axis coordinate system (x, y), and the coordinate of a center cell is indicated as (0, 0) and 1̅ refers to -1.

With reference to FIG. 3, the spacer grid 210 is composed of 17×17 lattice cells, the center cell (0,0) is where an instrumentation tube is positioned, and 28 guide tubes in total are arranged at specific positions. In addition, the fuel rods 220 are arranged in the remaining lattice cells but are omitted in FIG. 3.

In the description of the present disclosure, based on the center cell (0,0), the principal axis directions refer to the horizontal directions Ixx and the vertical directions Iyy of the spacer grid 210, the diagonal directions refer to the diagonal directions Ixy of 45° (and 135°), and the non-diagonal directions refer to diagonal directions Ixxy and Ixyy other than 45° (and 135°). The principal axis directions, the diagonal directions, and the non-diagonal directions each include both the positive (+) direction and the negative (-) direction.

28 guide tubes in total may be provided in the spacer grid 210. That is, with their arrangement based on the center cell (0,0), eight guide tubes may be arranged in the principal axis directions Ixx and Iyy, four in the diagonal directions Ixy, and 16 in the non-diagonal directions Ixxy and Ixyy. Meanwhile, as described above, at each guide tube arrangement position of the spacer grid, the guide tube may be directly fixed to the spacer grid or fixed to the spacer grid with the mediation of the separate sleeve.

The non-diagonal directions Ixxy and Ixyy may be arranged at an equal angle θ based on the diagonal directions Ixy. These may include a first non-diagonal directions Ixxy biased toward the x-axis and a second non-diagonal directions Ixyy biased toward the y-axis. In the present embodiment, the first non-diagonal directions Ixxy and the second non-diagonal directions Ixyy may have an angle θ of 18° between each of them and the diagonal directions Ixy.

The guide tubes may be arranged at (6,0), (3,0), (-3,0), and (-6,0) in the horizontal directions Ixx and at (0,6), (0,3), (0,-3), and (0,-6) in the vertical directions Iyy.

In addition, the guide tubes may be arranged at (5,5), (-5,-5), (-5,5), (5,-5) in the diagonal directions Ixy.

The guide tubes may be arranged at (6,3), (4,2), (-4,-2), and (-6,-3) and at (-6,3), (-4,2), (4,-2) , and (6,-3) in the first non-diagonal directions Ixxy and at (3,6), (2,4), (-2,-4), and (-3,-6) and at (-3,0), (-2,4), (2,-4), and (3,-6) in the second non-diagonal directions Ixyy.

In this way, the present disclosure enables the insertion of 28 control rods at specific positions within the spacer grid of 17×17 lattice cells, enhancing boric acid-free operation and seismic performance.

Specifically, from the perspective of the design of the nuclear fuel assembly, by applying 28 control rods to the nuclear fuel assembly with a 17×17 lattice cell spacer grid, it has been confirmed that the control rod worth increased by 17%, the nuclear fuel loading decreased by 1.5%, and the seismic performance enhanced. In addition, it has been confirmed that the reactivity is relatively high, and the core cycle length is increased compared to the conventional nuclear fuel assembly using 24-pin control rods.

In addition, in the subcriticality evaluation results based on the 24-pin control rod, the effective multiplication factor keff is evaluated to be no greater than 0.95 under the ARI condition and no greater than 0.99 under the N-1 condition, which means that the subcriticality condition is satisfied at a level with almost no margin. The results of the subcriticality evaluation based on the 28-pin control rod under conservative conditions are evaluated to have a margin of 0.98 for the effective multiplication factor keff under the N-1 condition. Therefore, the safety of a shutdown margin is further strengthened, and 4 additional spare positions for the top-mounted in-core instrumentation nozzle (TM-ICI) or the control rod assembly may be secured compared to the 24-pin control rod.

Next, from the perspective of mechanical design, the 28-pin control rod is intended to increase the control rod worth in relation to boric acid-free operation, and has the effect of facilitating TM-ICI acceptance and control rod loading/withdrawal. In conventional nuclear power plants, the core reactivity has been controlled by diluting boron, a toxic substance, in the coolant, but this may cause adverse effects such as crud deposition not only on nuclear fuel but also on major reactor core components. The present disclosure requires control of the core reactivity only with a control rod for boron-free operation of a small modular reactor. Therefore, the control rod worth of the present disclosure is increased compared to the existing one, making it effective for boron-free operation.

In addition, the present disclosure may strengthen the mechanical characteristics of the skeleton of a nuclear fuel assembly by increasing the number of guide tubes fixed to the top nozzle and the bottom nozzle.

Meanwhile, when applying boron-free operation and top-mounted in-core instrumentation (TM-ICI), the control rod worth for shutting down the reactor increases, while the number of control rods that may be installed decreases.

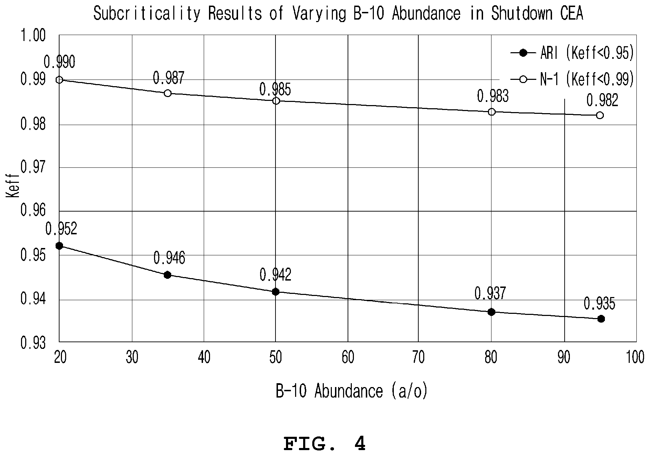

FIG. 4 is a graph showing changes in a reactor effective multiplication factor keff under each of ARI and N-1 conditions according to changes in B-10 concentration. The X-axis, B-10 abundance, represents a concentration ratio of B-10, and the Y-axis, keff, represents the reactor effective multiplication factor keff that is important in the nuclear fission system. The effective multiplication factor keff describes how close the system is to a critical state. When keff = 1, it is a condition where the chain reaction is able to continue in a critical state, keff < 1 indicates a subcritical state, and keff > 1 indicates a supercritical state.

As the B-10 concentration increases, the keff value decreases. As the B-10 concentration increases, the system gets closer to a subcritical state as B-10 absorbs neutrons and prevents a fission chain reaction.

"ARI, which stands for All Rods In," refers to a state where all control rods in the reactor are fully inserted. In this state, the reactor is in the most stable subcritical state, and when the control rods are inserted, they absorb neutrons and suppress the chain reaction, so the reactor works in the direction of stopping or reducing the chain reaction.

The ARI state is an important condition for safely shutting down or maintaining the reactor. In this graph, the keff of the ARI shows a decreasing trend as the B-10 concentration increases, which indicates that the subcritical state is maintained more safely as the B-10 concentration increases with all control rods inserted.

"N-1" refers to a state in which one control rod is removed, indicating the reactor's condition when only one of many control rods is withdrawn. The N-1 state is typically used for stability testing or evaluating safety margins and to assess whether the system may maintain a stable subcritical state even when one control rod fails to insert.

The keff value in the N-1 state tends to be higher than in the ARI state. As shown in FIG. 4, when the B-10 concentration increases in the N-1 state, keff decreases slightly, demonstrating that safety is maintained even when one control rod is withdrawn, as B-10 plays a crucial role in neutron absorption.

As shown in FIG. 4, applying concentrated B₄C improves the control rod's performance compared to natural B₄C. When the concentration reaches at least 30%, it satisfies the subcritical condition even under boric acid-free conditions. Taking into account the density tolerance of the B₄C sintered body, the B₄C concentration tolerance, and the uncertainty in the analysis, it is concluded that the subcritical condition is satisfied when the B-10 concentration reaches at least 70%. Therefore, the present disclosure further improves the control rod worth by increasing the B-10 concentration to at least 70%. Furthermore, the concentration of B-10 may be set to 95%. An evaluation is conducted using B₄C with 95% B-10 enrichment, taking into account various control rod specifications. The subcriticality evaluation results for each control rod (or finger) are shown in [Table 1] below.

**[Table 1]**

| Control rod specification | ARI | N-1 |
|---|---|---|
| 24 control rods | 0.94740 | 0.98697 |
| 28 control rods | 0.93766 | 0.98492 |

As shown in [Table 1], the control rods using B₄C with 95% B-10 enrichment meet the subcriticality criteria under both ARI and N-1 conditions, demonstrating a significant improvement in core safety. In particular, both the 24 and 28 control rods have demonstrated better performance compared to the existing natural B₄C application.

The control rod assembly utilizing highly concentrated B₄C in this way improves control rod worth by approximately 17% compared to natural B₄C and ensures sufficient reactivity control even under boric acid-free operating conditions.

The present disclosure is not limited to the described embodiments and accompanying drawings. Various substitutions, modifications, and changes may be made without departing from its technical spirit, as will be apparent to those skilled in the art.

## Claims

1. A control rod assembly with enhanced control rod worth, the control rod assembly comprising:
a plurality of spider vanes provided radially on a plane perpendicular to a spider body to support control rods,
wherein the control rods consist of 28 shutdown group neutron absorbers in total made of B₄C comprising B-10 enriched to at least 70%.

2. The control rod assembly of claim 1,
wherein the spider vanes include:
four first spider vanes Ixx and Iyy arranged in principal-axis directions;
four second spider vanes Ixy arranged in diagonal directions with respect to the first spider vanes; and
eight third spider vanes Ixxy and Ixyy arranged in non-diagonal directions between the first spider vanes Ixx and Iyy and the second spider vanes Ixy,
wherein each of the first spider vanes and the third spider vanes is provided with two control rods, and
each of the second spider vanes is provided with one, thereby resulting in 28 control rods in total.

3. The control rod assembly of claim 1, wherein the control rods are arranged:
two in each of the first spider vanes and the third spider vanes; and
one in each of the second spider vanes.

4. The control rod assembly of claim 1, wherein B-10 enrichment of the neutron absorbers is 95%.

5. The control rod assembly of claim 1, wherein the control rod assembly is used under boric acid-free operating conditions.
